(19) Europäisches Patentamt
European Patent Office
Office européen des brevets

(11) Veröffentlichungsnummer: **0 392 355 A2**

(12) **EUROPÄISCHE PATENTANMELDUNG**

(21) Anmeldenummer: **90106520.1**

(51) Int. Cl.[5]: **G11B 7/24**

(22) Anmeldetag: **05.04.90**

(30) Priorität: **11.04.89 DE 3911829**

(43) Veröffentlichungstag der Anmeldung:
**17.10.90 Patentblatt 90/42**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Brosius, Sibylle, Dr.**
**Cordovastrasse 29**
**D-6700 Ludwigshafen(DE)**
Erfinder: **Albert, Bernhard, Dr.**
**Rietburgstrasse 13**
**D-6701 Maxdorf(DE)**
Erfinder: **Schmitt, Michael, Dr.**
**Freudenbergstrasse 18**
**D-6940 Weinheim(DE)**
Erfinder: **Schomann, Klaus Dieter, Dr.**
**Kopernikusstrasse 47**
**D-6700 Ludwigshafen(DE)**
Erfinder: **Kuppelmaier, Harald, Dr.**
**In den Bannzaeunen**
**D-6701 Goennheim(DE)**
Erfinder: **Harten, Ulrich, Dr.**
**Berthold-Schwarz-Strasse 15**
**D-6700 Ludwigshafen(DE)**

(54) **Optisches Aufzeichnungsmedium.**

(57) Die Erfindung betrifft ein optisches Aufzeichnungsmedium, im wesentlichen bestehend aus einem Trägermaterial und einer lichtabsorbierenden Schicht, welche ein thermoplastisches Bindemittel und mindestens eines Farbstoffs enthält, wobei das thermoplastische Bindemittel ein polycyclischer Kohlenwasserstoff ist, der eine Glastemperatur Tg von größer 150 °C aufweist und in aliphatishen und aromatischen Kohlenwasserstoffen zu mehr als 3 Gew.% löslich ist.

EP 0 392 355 A2

Xerox Copy Centre

## Optisches Aufzeichnungsmedium

Die Erfindung betrifft ein optisches Aufzeichnungsmedium, im wesentlichen bestehend aus einem Trägermaterial und einer lichtabsorbierenden Schicht, welche ein thermoplastisches Bindemittel und mindestens einen Farbstoff enthält.

Aufzeichnungsmedien, bei denen die Speicherung von Informationen durch lokal begrenzte Veränderungen der optischen Eigenschaften des Mediums erfolgt, sind bekannt. Hierbei wird mit Strahlung hoher Energiedichte, z.B. Laserlicht, eine thermisch ausgelöste Zustandsänderung der für die Aufzeichnung vorgesehenen Teile des Aufzeichnungsmaterials erreicht. Diese Veränderungen können ein begrenztes Verdampfen von Material, eine durch Erweichen entstandene Form- oder Oberflächenänderung der für die Aufzeichnung vorgesehenen Schicht, ein Verfärben oder Ausbleichen eines Farbstoffs oder auch ein Wechsel in der physikalischen Struktur des Materials sein, wodurch eine Änderung der optischen Eigenschaften, z.B. der Absorption oder Extinktion, des für die Aufzeichnung einsetzbaren Materials bewirkt wird, welche anschließend mit geeigneten Vorrichtungen wieder nachweisbar und als gespeicherte Information verarbeitet werden kann.

Die bekannten optischen Aufzeichnungsmedien bestehen aus einem Trägermaterial aus Glas oder einem geeigneten Kunststoff, z.B. Polycarbonat, auf das dünne Schichten aus anorganischem Material, z.B. Metalle, Halbmetalle oder Legierungen, oder organische Verbindungen, z.B. Farbstoffe, aufgebracht sind. Diese dünnen Schichten werden vorwiegend durch Aufdampfen im Vakuum oder durch Sputtern erzeugt. Dabei muß jedoch die Dicke der Schicht so gewählt werden, daß optimale Reflexion stattfindet.

Für den Betrieb mit den vorwiegend eingesetzten im nahen Infrarot emittierenden Festkörperinjektionslasern werden als organische Farbstoffe insbesondere Phthalocyaninverbindungen, Methin-Farbstoffe und Quadratsäure-Derivate beschrieben. Azofarbstoff-Komplexe, Anthrachinon-und Triphenylmethanfarbstoffe sowie Pyrylium- und Thiopyryliumsalze sind ebenfalls beschrieben, aber nur eingeschränkt verwendbar, da ihr Absorptionsmaxiumum in den meisten Fällen für die bekannten Halbleiterlaser zu kurzwellig liegt. Dieses Problem entfällt bei den Dithiolen-Komplexen, die in großer Anzahl bekannt sind (G.N. Schrauzer, Acc. Chem. Res. 2, S. 72-80 (1969)) und deren Anwendung in optischen Aufzeichnungsmedien beschrieben ist.

In der US-PS 4 097 895 wird ein Aufzeichnungsträger beschrieben, der eine Schicht aus einem lichtreflektierenden Material, z.B. Aluminium oder Gold, und eine lichtabsorbierende Schicht, z.B. Fluoreszein, aufweist. Dieser Aufzeichnungsträger kann mit der Strahlung eines Argonlasers betrieben werden. Die Dicke der lichtabsorbierenden Schicht wird so gewählt, daß die Struktur ein minimales Reflexionsvermögen besitzt. Ein auffallender Lichtstrahl löst die absorbierende Schicht ab, verdampft oder schmilzt sie, so daß ein Loch entsteht, wodurch die lichtreflektierende Schicht freigelegt wird. Nach der Aufnahme ergibt sich für die Wellenlänge des zur Aufnahme benutzten Lichts ein Unterschied zwischen dem minimalen Reflexionsvermögen der lichtabsorbierenden Schicht und dem höheren Reflexionsvermögen der lichtreflektierenden Schicht. Wenn das lichtreflektierende Material als dünne Schicht auf einem nur wenig wärmeleitenden Substrat vorgesehen ist, ist der Energieverlust sowohl durch Reflexion an der dünnen absorbierenden Schicht als auch wegen der geringen Wärmeleitung in der reflektierenden Schicht sehr klein. Die aus dem Lichtstrahl absorbierte Energie wird also auf dem sehr dünnen Film konzentriert.

Generell gilt jedoch, daß das Aufbringen der lichtabsorbierenden Farbstoffschichten durch Verdampfen im Vakuum oder durch Sputtern nicht nur aufwendig, sondern auch schwierig zu reproduzieren ist, da der Farbstoff in einer glatten Schicht mit hoher optischer Qualität in einer für die Empfindlichkeit des Aufzeichnungsmediums ausreichenden Dicke vorliegen muß und solche Farbstoffschichten außerdem mechanisch zu weich sind und auch zu leicht kristallisieren.

Um die Schichtqualität zu verbessern und die Empfindlichkeit zu erhöhen bzw. das Rauschen zu vermindern, wurde auch schon vorgeschlagen, den lichtabsorbierenden Farbstoff enthalten in einem schichtbildenden polymeren Bindemittel aufzubringen. Aus der US-A 4 380 769 sind mit einem Argonlaser beschreibbare Aufzeichnungsträger bekannt, welche als lichtabsorbierende Schicht Azofarbstoffe und/oder Cumarinverbindungen in einem polymeren Bindemittel enthalten. Die Verwendung von Farbstoffen in Verbindung mit Styrololigomeren wird von Kuroiwa in Jap. J. Appl. Phys., Vol. 22, No. 2, 1983, Seiten 340-43 beschrieben. Dort wird auch auf die Schwierigkeiten einer solchen Stoffkombination bei lichtabsorbierenden Schichten bedingt durch eine Phasentrennung und die Inkompatibilität zwischen Farbstoff und Oligomeren hingewiesen. Daneben wird u.a. sowohl in der US-A 3 637 581 als auch in der EP-A 200 833 die Möglichkeit aufgezeigt, durch eine chemische Bindung zwischen dem Chromophor und dem Polymeren die vorgenannten Nachteile zu beheben. Für viele Anwendungsgebiete ist eine solche Maßnahme jedoch ungeeignet, da nur eine geringe Auswahl an Farbstoffen hierfür in Frage kommen, die zudem keine optimalen lichtabsorbierenden Schichten ergeben.

Zusammenfassend ergibt sich, daß der Einsatz spezieller, wegen ihrer ausgezeichneten Absorptionseigenschaften besonders geeigneter Farbstoffe für die Speicherschichten optischer Aufzeichnungsmedien vor allem Probleme bezüglich des Aufbringens optisch einheitlicher und stabiler Schichten aufwirft. Dabei ist insbesondere die Kristallisation in reinen Farbstoffschichten sowie in schlecht verträglichen Farbstoff/Bindemittel-Schichten zu erwähnen. Auch der Zusatz dieser Farbstoffe zu schichtbildenden Polymeren zeigt durch die nur beschränkte Löslichkeit der Komponenten bzw. durch eine zeitlich bedingte Phasentrennung Schwierigkeiten. Auch ist es üblich, die lichtabsorbierende Schicht auf den meist aus Polycarbonat bestehenden Träger aufzuschleudern, so daß sich unter anderem aliphatische Kohlenwasserstoffe als Lösungsmittel anbieten. Die meisten der hierfür verwendeten gängigen Filmbildner sind jedoch in aliphatischen Kohlenwasserstoffen unlöslich.

Es bestand daher die Aufgabe, optische Aufzeichnungsmedien bereitzustellen, deren lichtabsorbierende Schicht aus einer löslichen Mischung eines Farbstoffs und eines Polymeren besteht, wobei das Polymere die Ausbildung dickerer Schichten erlaubt sowie eine Unterdrückung der Kristallisation und eine Heraufsetzung der mechanischen Stabilität bewirken soll.

Es wurde nun gefunden, daß optische Aufzeichnungsmedien, im wesentlichen bestehend aus einem Trägermaterial und einer lichtabsorbierenden Schicht, welche ein thermoplastisches Bindemittel und mindestens einen Farbstoff enthält, die Aufgabe lösen, wenn das thermoplastische Bindemittel ein polycyclischer Kohlenwasserstoff ist, der eine Glastemperatur Tg von größer 150 °C aufweist und in aliphatischen und aromatischen Kohlenwasserstoffen zu mehr als 3 Gew.% löslich ist.

Besonders geeignet sind polycyclische Kohlenwasserstoffe, die zu mehr als 80 %, insbesondere zu mehr als 90 %, aus Einheiten der allgemeinen Formel I

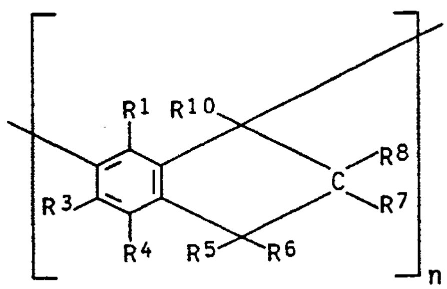

(I)

bestehen, in der n eine ganze Zahl von 10 bis 1000, insbesondere von 10 bis 100 und die Reste $R^1$, $R^3$ bis $R^8$ und $R^{10}$ unabhängig voneinander Wasserstoff und/oder ein $C_1$- bis $C_3$-Alkylrest bedeuten.

In einer vorteilhaften Ausgestaltung der erfindungsgemäßen optischen Aufzeichnungsmedien ist der polycyclische Kohlenwasserstoff zu mehr als 80 %, insbesondere zu mehr als 90 %, aus Einheiten der allgemeinen Formel II

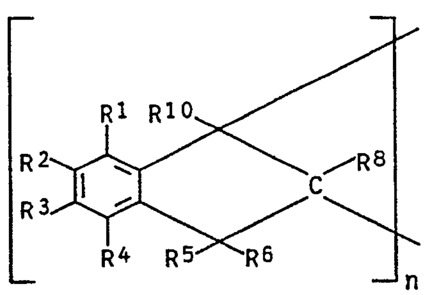

(II)

aufgebaut, in der n eine ganze Zahl von 10 bis 1000, insbesondere von 10 bis 100 und die Reste $R^1$ bis $R^6$, $R^8$ und $R^{10}$ unabhängig voneinander Wasserstoff und/oder einen $C_1$- bis $C_3$-Alkylrest bedeuten.

Eine weitere vorteilhafte Ausgestaltung ergibt sich, wenn in der allgemeinen Formel II n eine ganze Zahl von 10 bis 1000, insbesondere von 10 bis 100 und die Reste $R^1$ bis $R^3$, $R^8$ und $R^{10}$ unabhängig voneinander Wasserstoff und/oder einen $C_1$- bis $C_3$-Alkylrest und $R^4$ einen (-CH=CH-CH=)-Rest, welcher mit der endständigen Doppelbindung anstelle der Reste $R^5$ und $R^6$ mit dem Fünfring verbunden ist, bedeuten.

Die Herstellung der obenbezeichneten polycyclischen Kohlenwasserstoffe erfolgt mittels kationischer

Polymerisation, wie sie u.a. von W.R. Sorensen und T.W. Campbell in "Preparative Methods in Polymer Chemistry", 2nd Edition, 1968, Seite 193 bis 194, John Wiley and Sons; GB-PS 864 275; oder von A. Ledwith, D.C. Sherrington, Macromolecular Synthesis, 6 (1977), 19 - 21 beschrieben ist.

Als Farbstoffe für die lichtabsorbierende Schicht kommen die an sich bekannten IR-Farbstoffe in Frage. Es sind vorwiegend die Klassen der Azulenquadratsäurefarbstoffe, wie sie in der DE-A 37 33 173 beschrieben sind, der Cyaninfarbstoffe gemäß den DE-A 35 33 772, 36 08 214, 37 38 911 und 38 10 642, der Phthalocyanin- und Naphthalocyaninfarbstoffe, wie z.B. gemäß den DE-A 34 46 418, 35 20 109, den EP-A 155 780, 186 404, 191 215, 204 876, 213 923, der Dithiolenfarbstoffe gemäß DE-A 35 05 751, der Naphthochinon- und Anthrachinonfarbstoffe, der Chinonfarbstoffe gemäß DE-A 35 07 379, der Azofarbstoffe gemäß US-A 4 702 945, der N,N,N′,N′-Tetratris(p-dialkylaminophenyl)p-phenylendiamine, der Porphyrine und der Azokomplexfarbstoffe.

Im Zusammenhang mit dem erfindungsgemäßen optischen Aufzeichnungsmedium besonders bevorzugte Farbstoffe sind die Azulenquadratsäurefarbstoffe, wie sie u.a. in den DE-A 36 31 843, 37 33 173 und 38 10 642 genannt sind, und die Si-Naphthalocyanine (DE-A 38 10 956 und DE-A 38 30 041).

Zur Herstellung des erfindungsgemäßen optischen Aufzeichnungsmediums wird eine Farbstofflösung angesetzt, die einen Gehalt von Feststoff zu Lösungsmittel zwischen 0,50 zu 99,5 und 6 zu 94 Teilen, vorzugsweise zwischen 2 zu 98 und 4 zu 96 Teilen aufweist. Nach erfolgtem Auflösen werden Staub und andere nicht gelöste Bestandteile durch übliche Verfahren, z.B. Zentrifugation oder Filtration, abgetrennt. Die Lösung wird mit einer handelsüblichen Laborbelackungsanlage (z.B. ein Gerät der Firma Convac) auf eine Scheibe aufgetragen, wobei sich die Schichtdicke durch die Zusammensetzung der Lösung und die Rotationsgeschwindigkeit der Scheibe einstellen läßt. Die Schichtdicke läßt sich mit einem α-Step-Gerät (z.B. α-Step-Gerät 200 der Firma Tencor) bestimmen, indem in der Schicht auf einem harten Substrat, vorzugsweise Glas, die Höhe eines Kratzers mit einer feinen Nadel abgetastet wird. Die Homogenität wird unter einem Lichtmikroskop (z.B. bei 500-facher oder 1000-facher Vergrößerung) kontrolliert. Die optischen Eigenschaften der Schicht werden mit einem UV-VIS-Spektrometer (z.B. Lambda 5 der Firma Perkin Elmer) gemessen. Die Schreib/Lese-Eigenschaften werden mit einem fokussierten Laserstrahl bei einer Wellenlänge von 830 nm und einer Leistung des Diodenlasers zwischen 0,4 und 10 mW bestimmt. Detektiert wird mit einem TAOHS-Kopf, NA = 0,5 der Firma Olympus. Die elektronenmikroskopischen Aufnahmen werden mit einem DSM 950 der Firma zeiss, Oberkochen, gemacht.

Die auf diese Weise hergestellten erfindungsgemäßen optischen Aufzeichnungsmedien zeichnen sich durch eine hohe Stabilität der lichtabsorbierenden Schicht, eine geringe Empfindlichkeit gegenüber Wasser, eine hohe Reflektivität sowie ein geringes Grundrauschen aus.

Die Erfindung sei anhand der folgenden Beispiele im Vergleich zu Versuchen nach dem Stand der Technik näher erläutert (Mengenangaben in Teilen geben Gewichtsteile an).

Vergleichsbeispiel 1

Es wird eine Farbstofflösung aus 3 Teilen Farbstoff gemäß Beispiel 19 der DE-A 38 10 956, jedoch mit der Änderung, daß zwischen der Isooctyl- und der SiO-Gruppe zwei weitere Methylengruppen eingebaut sind, und 96 Teilen Cyclohexan angesetzt. Staub und ungelöste Teilchen werden durch Filtration entfernt. Bei Umdrehungsgeschwindigkeiten zwischen 700 und 4000 Upm werden Schichtdicken um 100 nm erhalten. Die Schichten sind sehr weich und ungleichmäßig und zeigen nach 2 Tagen feine Kristallite über der gesamten Schicht.

Beispiel 1

Es wird eine Farbstofflösung aus 1,5 Teilen Farbstoff gemäß Beispiel 19 der DE-A 37 33 173 und 1,5 Teilen Polymethylinden der Formel I und 97 Teilen Cyclohexan angesetzt, wobei das Polymethylinden ein mittleres Molekulargewicht von 10 000 (ermittelt durch GPC in THF mit Polystyrol als Standard), eine Glastemperatur von 280 °C (bestimmt nach DSC bei 20 °C/Min Heizrate) und eine Zersetzungstemperatur > 500 °C (laut DSC) aufweist. Die staubfrei filtrierte Lösung wird analog Vergleichsbeispiel 1 aufgeschleudert. Es werden Schichtdicken von 100 nm erhalten. Die Schichten weisen keine Kristallisation auf und bleiben stabil.

Vergleichsbeispiel 2

Es wird eine Farbstofflösung aus 1,7 Teilen Farbstoff gemäß Beispiel 8 der DE-A 38 16 187, 1 Teil p-Kresol-Formaldehyd-Kondensat und 97,3 Teilen 1,1,2-Trichlorethan angesetzt. Das p-Kresol-Formaldehyd-Kondensat hat ein mittleres Molekulargewicht von 430 (ermittelt mit GPC) und eine Glastemperatur von 42 °C (ermittelt mit DSC bei einer Aufheizrate von 20 °C). Die staubfrei filtrierte Lösung wird analog Vergleichsbeispiel 1 aufgeschleudert. Bei Einstrahlung mit einem fokussierten Laserstrahl eines Diodenlasers mit 830 nm und 10 mW Leistung ergibt sich ein Loch mit flachen Rändern, die bei dichterer Belegung stark ineinanderlaufen (Bild 1). Bei längerer Erwärmung auf 80 °C verlieren die eingeschriebenen Pits ihre Form. Die Schreibempfindlichkeit wird bei geringer Schreibgeschwindigkeit durch das pulse crowding begrenzt.

Beispiel 2 A

Es wird eine Farbstofflösung aus 1,7 Teilen Farbstoff gemäß Beispiel 8 der DE-A 38 16 187, 1 Teil Polymethylinden der Formel I und 97,3 Teilen 1,1,2-Trichlorethan angesetzt. Das Polymethylinden der Formel I weist ein mittleres Molekulargewicht von 10000 (ermittelt durch GPC in THF mit Polystyrol als Standard), eine Glastemperatur von 280 °C (bestimmt mit DSC bei einer Heizrate von 20 °C/Min) und eine Zersetzungstemperatur > 500 °C (ebenfalls laut DSC) auf. Die staubfrei filtrierte Lösung wird analog Vergleichsbeispiel 1 aufgeschleudert. Bei Einstrahlung in gleicher Weise wie in Vergleichsbeispiel 2 beschrieben, ergeben sich Pits mit scharfen Rändern, die auch bei dichterer Belegung noch getrennt sind (Bild 2). Man erhält insgesamt eine geringere Schreibempfindlichkeit, aber gleichzeitig wird das pulse crowding unterdrückt. Bei längerer Erwärmung bleiben die Pits stabil.

Beispiel 2B

Es wird eine Farbstofflösung aus 1,7 Teilen Farbstoff gemäß Beispiel 8 der DE-A 38 16 187 und 1 Teil Polymethylinden der Formel I und 97,3 Teilen 1,1,2-Trichlorethan angesetzt. Das Polymer besitzt ein mittleres Molekulargewicht von 2500 (ermittelt durch GPC in THF mit Polystyrol als Standard), eine Glastemperatur von 230 °C (bestimmt mit DSC bei 20 °C/Min Heizrate) und eine Zersetzungstemperatur > 500 °C (ebenfalls mit DSC) auf. Die staubfrei filtrierte Lösung wird analog Vergleichsbeispiel 1 aufgeschleudert. Die Schreibempfindlichkeit ist größer als im Beispiel 2 und das pulse crowding ist weniger unterdrückt.

Vergleichsbeispiel 3

Es wird eine Farbstofflösung aus 2,1 Teilen Farbstoff gemäß Beispiel II,16 der DE-A 38 16 187, 0,9 Teilen eines p-n-Oktylphenol-Formaldehyd-Kondensates mit einer Glastemperatur von 97 °C (gemessen mit DSC mit einer Aufheizrate von 20 °C/min) und 97 Teilen Methylcyclohexan hergestellt. Die filtrierte Lösung wird, wie in Vergleichsbeispiel 1 angegeben, aufgetragen. Es werden glatte fehlerfreie und sehr weiche Schichten erhalten. Nach 200 Stunden im beschleunigten Langzeittest (80 °C, 80 % Luftfeuchtigkeit) wird die ursprünglich schmale Absorptionsbande sehr breit und flach. Die Schicht ist trüb geworden und zeigt im Mikroskop grobe Strukturen, wie sie durch Kristallisation hervorgerufen werden.

Beispiel 3A

Es wird eine Farbstofflösung aus 2,1 Teilen Farbstoff gemäß Beispiel II,16 der DE-A 38 16 187, 0,9 Teilen Polyacenaphthylen der Formel II und 97 Teilen Cyclohexen hergestellt. Die Glastemperatur des Polyacenaphthylen beträgt 310 °C (gemessen mit DSC mit einer Aufheizrate von 20 °C/min) und das mittlere Molekulargewicht beträgt 9000 (bestimmt mit GPC und Polystyrol als Eichstandard). Die filtrierte Lösung wird gemäß Vergleichsbeispiel 1 aufgetragen. Die Schichten sind klar und störungsfrei. Die Absorptionsbande wird nach 200 Stunden im beschleunigten Langzeittest etwas schärfer und höher und das Absorptionsmaximum verschiebt sich zu etwas größeren Wellenlängen. Die Schichten bleiben klar, jedoch sind einige Störungen in der Schicht entstanden, hauptsächlich etwas hellere Flecken in der Schicht und großräumige flache Unebenheiten. Es ist keine Kristallisation zu beobachten.

Beispiel 3B

Es wird eine Farbstofflösung aus 1,5 Teilen Farbstoff gemäß Beispiel II,16 der DE-A 38 16 187, 1,5 Teilen Polymethylinden der Formel I und 97 Teilen Methylcyclohexan hergestellt. Das Polymethylinden hat ein mittleres Molekulargewicht von 2500 (bestimmt mit GPC und Polystyrol als Eichstandard) und einer Glastemperatur von 230 (gemessen mit DSC bei einer Aufheizrate von 20 °C/min). Die Schichten waren glatt und klar. Nach 200 Stunden im beschleunigten Langzeittest hatte die Absorptionsbande weder Lage noch Form geändert und auch in der Höhe kaum abgenommen. Die Schichten sind klar und weisen keine Kristallisation auf.

Vergleichsbeispiel 4

Es wird eine Farbstofflösung aus 3 Teilen Farbstoff gemäß Beispiel II,16 der DE-A 38 16 187, 2 Teilen Polystyrol und 95 Teilen Cyclohexan zugesetzt. Die Lösung wird erwärmt, nach dem Abkühlen durch ein Filter mit 0,4 µm Porengröße gegeben und gemäß Vergleichsbeispiel 1 aufgeschleudert. Alle Schichten zeigen etwa 5 µm große runde Ausscheidungen und große Schlieren in der Schicht zwischen den Ausscheidungen. Auf dem Laufwerk ergeben sich große Signalschwankungen, die als eine Ursache für hohe Fehlerraten angesehen werden.

Beispiel 4

Es wird eine Farbstofflösung aus 3 Teilen Farbstoff gemäß Beispiel II,16 der DE-A 38 16 187, 2 Teilen Polymethylinden der Formel I mit einem mittleren Molekulargewicht von 10 000 (ermittelt durch GPC in THF mit Polystyrol als Standard) und einer Glastemperatur von 280 °C (bestimmt mit DSC bei einer Heizrate von 20 °C/min) und einer Zersetzungstemperatur größer 500 °C (ebenfalls gemäß DSC) hergestellt mit 95 Teilen Cyclohexan. Mit der Lösung wird, wie im Vergleichsbeispiel 4 dargestellt, verfahren. Die Schichten zeigen keine Ausscheidungen. Das vom Laufwerk gemessene Signal ist homogen.

Vergleichsbeispiel 5

Es wird eine Farbstofflösung aus 2 Teilen Farbstoff gemäß Beispiel II,16 der DE-A 38 16 187, 1 Teil Phenol-Novolak-Kokondensat und 97 Teilen Solvenon IPP® angesetzt. Das Phenol-Formaldehyd-Cokondensat besitzt ein mittleres Molekulargewicht von 2500 (bestimmt mit Lichtstreuung) und eine Glastemperatur von 110 °C (bestimmt mit DSC mit einer Aufheizrate von 20 °C/min). Die filtrierte Lösung wird analog Vergleichsbeispiel 1 aufgetragen. Die Schichten sind trüb und zeigen im Mikroskop, daß während des Aufschleuderprozesses eine Entmischung stattgefunden hat. Die farbstoffreichen Phasen zeigen Kristallisation.

Beispiel 5

Es wird eine Farbstofflösung aus 2 Teilen Farbstoff gemäß Beispiel II, 16 der DE-A 38 16 187, 1 Teil Polyinden der Formel II mit einem mittleren Molekulargewicht von 13000 (bestimmt mit GPC und Polystyrol als Eichstandard) und einer Glastemperatur von 184 °C (bestimmt mit DSC mit einer Aufheizrate von 20 °C/min) und 97 Teilen Cyclohexen angesetzt. Die filtrierte Lösung wird analog Vergleichsbeispiel 1 aufgetragen. Die Schichten sind klar, mechanisch sehr stabil und zeigen keine Entmischungsstrukturen und keine Kristallite.

**Ansprüche**

1. Optisches Aufzeichnungsmedium, im wesentlichen bestehend aus einem Trägermaterial und einer lichtabsorbierenden Schicht, welche ein thermoplastisches Bindemittel und mindestens einen Farbstoff enthält, dadurch gekennzeichnet, daß das thermoplastische Bindemittel ein polycyclischer Kohlenwasserstoff ist, der eine Glastemperatur Tg von größer 150 °C aufweist und in aliphatischen und aromatischen

Kohlenwasserstoffen zu mehr als 3 Gew.% löslich ist.

2. Optisches Aufzeichnungsmedium gemäß Anspruch 1, dadurch gekennzeichnet, daß der polycyclische Kohlenwasserstoff zu mehr als 80% aus Einheiten der allgemeinen Formel I

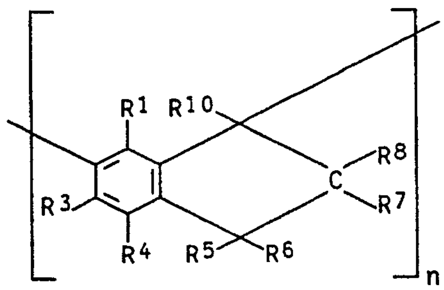

(I)

besteht, in der n eine ganze Zahl von 10 bis 1000, und die Reste $R^1$, $R^3$ bis $R^8$ und $R^{10}$ unabhängig voneinander Wasserstoff und/oder ein $C_1$- bis $C_3$-Alkylrest bedeuten.

3. Optisches Aufzeichnungsmedium gemäß Anspruch 1, dadurch gekennzeichnet, daß der polycyclische Kohlenwasserstoff zu mehr als 80 % aus Einheiten der allgemeinen Formel II

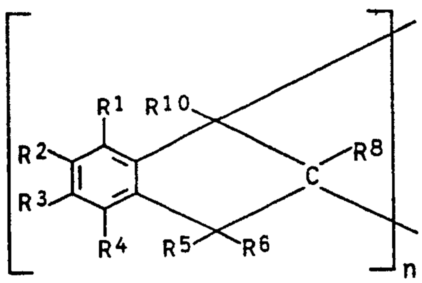

(II)

besteht, in der n eine ganze Zahl von 10 bis 1000 und die Reste $R^1$ bis $R^6$, $R^8$ und $R^{10}$ unabhängig voneinander Wasserstoff und/oder einen $C_1$- bis $C_3$-Alkylrest bedeuten.

4. Optisches Aufzeichnungsmedium gemäß Anspruch 3, dadurch gekennzeichnet, daß in der allgemeinen Formel II n eine ganze Zahl von 10 bis 1000, die Reste $R^1$ bis $R^3$, $R^8$ und $R^{10}$ unabhängig voneinander Wasserstoff und/oder einen $C_1$- bis $C_3$-Alkylrest und $R^4$ einen (-CH=CH-CH=)-Rest, welcher mit der endständigen Doppelbindung anstelle der Reste $R^5$ und $R^6$ mit dem Fünfring verbunden ist, bedeuten.

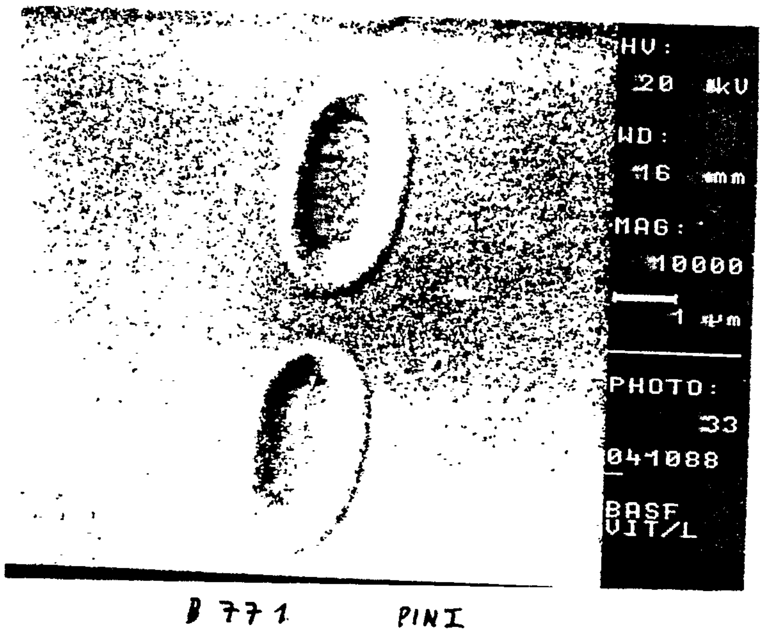


B 771 PINI

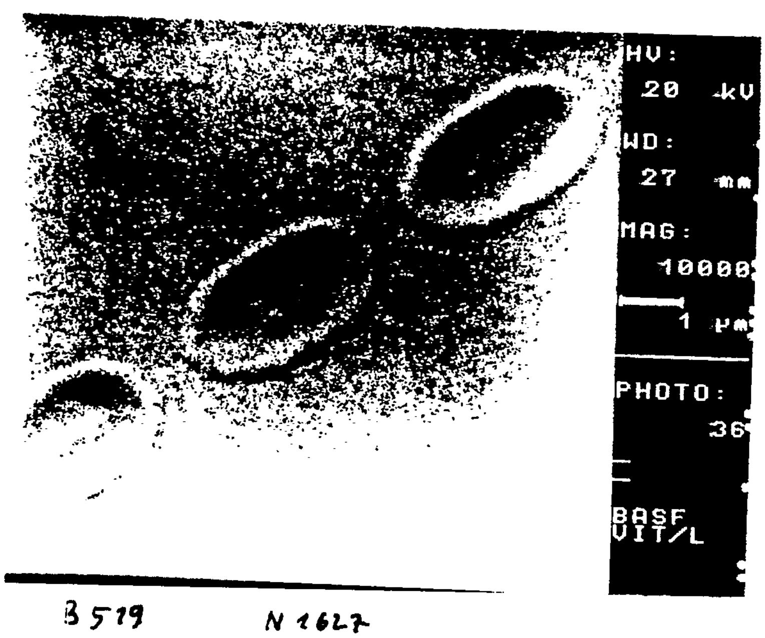


B 519 N 1627